# EUROPÄISCHE PATENTSCHRIFT

(11) **EP 2 142 830 B1**
(45) Veröffentlichungstag und Bekanntmachung des Hinweises auf die Patenterteilung: **24.11.2010**
(21) Anmeldenummer: 07727825.7
(22) Anmeldetag: 05.04.2007
(51) Int. Cl.: F16K 31/122

(54) **LUFTGESTEUERTES VENTIL**
AIR-CONTROLLED VALVE
SOUPAPE À COMMANDE PNEUMATIQUE

(43) Veröffentlichungstag der Anmeldung: 13.01.2010
(73) Patentinhaber: EUGEN SEITZ AG, CH-8623 Wetzikon (CH)
(72) Erfinder: RYMANN, Othmar, CH-8362 Balterswil (CH)
(74) Vertreter: EGLI-EUROPEAN PATENT ATTORNEYS
(86) Internationale Anmeldenummer: PCT/EP2007/053357
(87) Internationale Veröffentlichungsnummer: WO 2008/122311

(56) Entgegenhaltungen:
- EP-A- 1 574 771
- DE-B- 1 142 938
- GB-A- 1 103 143
- US-A- 3 107 692

## Beschreibung

Die vorliegende Erfindung betrifft ein Ventil nach dem Oberbegriff von Anspruch 1, wie z.B. in GB 1 103 143 offenbart ist.

Für die Herstellung von Kunststoffflaschen, insbesondere von PP-Flaschen und von PET-Flaschen, wird ein Rohling oder Vorformling in einer Hohlkörperblasmaschine in einem Blaszylinder in der Regel in zwei Schritten in seine endgültige Form aufgeblasen. Hierfür weist der Rohling bereits im Wesentlichen den fertigen Flaschenkopf auf, welcher in der Blasform der Hohlkörperblasmaschine gehalten und mit einem Druckluftsystem verbunden wird. Durch Einblasen von Druckluft durch den Flaschenkopf wird der Rohling aufgeblasen und schliesslich in seine endgültige Form gebracht.

Dieser Blasprozess wird üblicherweise in einem zweistufigen Verfahren ausgeführt, wobei als erste Stufe ein Vorblasen mit einem Druckwert zwischen 2 bis 20 bar über ein Vorblasventil erfolgt, und danach in einer zweiten Stufe das Endblasen, d.h. das Formen der Kunststoffflasche zu ihrer Endform, mit einem Druckwert zwischen 15 bis 40 bar über ein Hauptblasventil erfolgt. Diese beiden Ventile sind jeweils mit einer Druckquelle mit dem der entsprechenden Verfahrensstufe entsprechenden Druckpotential verbunden.

Um eine wirtschaftliche Produktion zu gewährleisten müssen diese Prozesse so rasch als möglich ablaufen. Hierfür wird herkömmlicherweise eine Ventilanordnung bestehend aus zwei Ventilen, einem Vorblasventil und einem Blasventil verwendet welche beispielsweise auf einem gemeinsamen Block angeordnet sind.

Anschliessend an diese beiden Blasstufen muss die Verbindung zu den Druckquellen unterbrochen und der Druck aus der Kunststoffflasche und aus den Zuführkanälen abgelassen werden, bevor die Kunststoffflasche von der mit dem Blaszylinder verbundenen Blasform entfernt werden kann. Dieser Prozessschritt wird auch als Entlüftung bezeichnet.

Diese Entlüftung erfolgt herkömmmlicherweise über ein Entlüftungsventil, welches mit dem Blaszylinder verbunden ist und in geöffneter Stellung die Druckluft in die Umgebung abgibt.

Da das Druckniveau und die Luftmenge für den Blasprozess mittels einer Druckerzeugungseinrichtung generiert werden müssen, bedeutet das Abblasen dieser Luftmenge in die Umgebung ein entsprechend grosser Energieverlust. Hierfür sind Vorrichtungen und Verfahren bekannt, um wenigstens einen Teil dieser Abluft wieder zurückzugewinnen und als Prozessluft einzusetzen.

Beispielsweise sind Ventileinrichtungen bekannt, bei welchen eine Teilrückgewinnung der Druckluft über ein separates Ventil, ein sogenanntes Sparventil, welches zwischen dem Blaszylinder und dem Entlüftungsventil angeordnet ist, realisiert wird.

All diese Ventile müssen für den Prozessablauf angesteuert werden, wofür unterschiedliche Systeme eingesetzt werden. Beispielsweise werden diese Ventile magnetisch betätigt oder mittels separaten Steuerventilen auch pneumatisch betätigt. Da die Hohlkörperblasmaschinen ohnehin mit Druckluft betrieben werden, bietet sich dieses Arbeitsmittel grundsätzlich auch als Steuermedium für die Ventile an.

Ein Problem bei derartigen herkömmlichen luftgesteuerten Ventilen besteht darin, dass einerseits die Ansprechzeit solcher Ventile von der Höhe des Druckes des Steuerventils abhängig ist und andererseits die Funktion des Ventils vom Arbeitsdruck des zu steuernden Druckflusses abhängig ist. D.h dass derartige Ventile praktisch nicht leer, d.h. ohne Vorliegen eines solchen Arbeitsdruckes angesteuert werden können.

Beispielsweise ist aus der DE 1 142 938 ein pneumatisches Schnellschaltventil bekannt, dass die Zufuhr einer Hochdruckleitung unterbrechen kann, und in geschlossenem Zustand gleichzeitig eine Entlüftung der unterbrochenen Abluftleitung bietet. Ein Nachteil dieser Ventileinrichtung besteht darin, dass verhältnismässig grosse Toträume vorhanden sind, die bei der Betätigung des Ventils mit Druckluft gefüllt werden und schliesslich an die Umgebung wieder abgegeben werden.

Die Aufgabe der vorliegenden Erfindung bestand nun darin, ein luftgesteuertes Ventil mit möglichst kurzer Ansprechzeit für praktisch beliebige Druckniveaus zu finden, welches möglichst kleine Toträume aufweist.

Diese Aufgabe wird erfindungsgemäss durch ein Ventil mit den Merkmalen nach Anspruch 1 gelöst. Weitere erfindungsgemässe Ausführungsformen ergeben sich aus den Merkmalen der weiteren Ansprüche 2 bis 13.

Durch diesen Aufbau kann eine einfache Steuerung des Kolbens über die beiden Steuerkammern des Kolbenringes erfolgen, wobei die Steuerkräfte verhältnismässig klein ausfallen können und damit ein herkömmliches, einfaches Steuerventil eingesetzt werden kann. Da die entsprechenden Steuerflächen radial vom Kolben nach Aussen abragend angeordnet sind, weisen sie einerseits kompakte Abmessungen bei trotzdem grossen Wirkflächen auf. Durch die Dimensionierung der Wirkflächen des Kolbens wird dieser durch den Arbeitsdruck selbst beim Öffnen unterstützt, was zu sehr schnellen Öffnung resp. Schliesszeiten führt.

Das Verhältnis der Wirkflächen wird vorteilhaft derart gewählt, dass bei offenen Ventil, d.h. wenn die Ventildichtung des Kolbens vom Ventilsitz gelöst worden ist, nahezu ausgeglichen ist resp. nahezu gleich gross sind. Damit wirken praktisch keine Kräfte in Längsrichtung auf den Kolben und er benötigt für seine Bewegung lediglich verhältnismässig kleine Steuerkräfte. In geschlossenem Zustand des Ventils, d.h. wenn die Ventildichtung des Kolbens gegen den Ventilsitz in Anschlag steht, wird ein Verhältnis der Wirkflächen von ca. 80% angestrebt, d.h. dass die Wirkfläche im Bereich der Ventildichtung nur ca. 80% der Wirkfläche der anderen Stirnseite des Kolbens beträgt.

Beispielsweise weist der die Ventildichtung als Schliesskante einen runden Flansch mit im Wesentlichen gerader Schliessfläche auf, wobei die Schliessfläche vorzugsweise senkrecht zur Schliessrichtung des Kolbens ausgerichtet ist. Damit wird eine gute Dichtwirkung bei grossem Öffnungsquerschnitt erreicht. Die Schliessfläche beträgt dabei vorteilhaft zwischen 5% - 25% der Wirkfläche der entsprechende Stirnseite des Kolbens. Beim Öffnen des Ventils, d.h. beim Abheben des Kolbens resp. der Ventildichtung von ihrem Sitz wird das Ventil praktisch unmittelbar vollständig druckkompensiert, da die beiden Wirkflächen der beiden Stirnseiten des Kolbens nun praktisch gleich gross sind, wodurch die Bewegungskraft für den Kolben sinkt und damit eine hohe Kolbengeschwindigkeit d.h. Öffnungsgeschwindigkeit des Ventils erzielt wird.

Beispielsweise ist die Aussenfläche des Flansches der Ventildichtung zur Schliessfläche hin radial nach innen angeschrägt ausgeführt. Das bedeutet, dass der Flansch in Richtung der Schliessfläche angefast ist. Damit wird eine Wirkfläche geschaffen, die durch den im entsprechenden Ventilraum herrschenden Druck ein in Öffnungsrichtung gerichtete Kraft auf den Kolben ausüben kann. Damit kann beispielsweise eine Überdruck-Notöffnung realisiert werden, die den Kolben anhebt, wenn das Druckniveau resp. die Druckdifferenz in Bezug auf den Druck im anderen Ventilraum resp. im Kanal des Kolbens einen bestimmten Wert überschreitet.

Beispielsweise sind der Kolben und die Ventildichtung einteilig aus einem Material, vorzugsweise aus Kunststoff, ausgebildet. Damit lässt sich der Kolben einfach als einzelnes Teil herstellen und lässt sich auch für verhältnismässig kleine Durchmesser derart ausführen.

Alternativ sind der Kolben und die Ventildichtung zweiteilig aus unterschiedlichen Materialien ausgebildet, wobei die Ventildichtung vorzugsweise aus Kunststoff besteht. Damit kann der Kolben beispielsweise aus Metall mit verhältnismässig geringen Wandstärken gefertigt sein und die Ventildichtung kann einfach auf die entsprechende Stirnfläche des Kolbens aufgesteckt und damit verbunden werden.

Beispielsweise ist der Kanal zwischen den beiden Stirnflächen des Kolbens gerade und mit gleich bleibendem Querschnitt ausgebildet. Damit wird ein strömungstechnisch günstiger Kanal geschaffen, der nur kleinste Druckverluste aufweist.

Beispielsweise entspricht der Querschnitt des Kanals dem Querschnitt des Eintrittskanals in den ersten Ventilraum. Damit entstehen in diesem Bereich keine Strömungsgeschwindigkeitsänderungen, was ebenfalls die Strömungsverluste resp. Druckverluste minimiert.

Beispielsweise ist der Aussendurchmesser des Kolbens im Bereich seiner Stirnflächen gleich gross. Damit werden geometrisch eindeutige und klar definierte Wirkflächen geschaffen die bereits bei kleinen Druckdifferenzen zwischen den beiden Ventilräumen eine Kraft auf den Kolben ausüben können.

Beispielsweise ist der Ventilsitz an der oberen Stirnseite eines Hilfskolbens angeordnet, welcher vorzugsweise koaxial zum Kolben in den zweiten Ventilraum bewegbar im Gehäuse angeordnet ist und in der oberen Endlage des Kolbens gegen die Ventildichtung in Anschlag verschiebbar ist. Dieser Hilfskolben kann so als Rückschlagsicherung resp. Rückschlagventil eingesetzt werden. D.h. durch die Bewegung des Hilfskolbens kann das Ventil auch in der offenen Position des Kolbens geschlossen werden. Dabei wird ein einfacher und platzsparender Aufbau erzielt, der einfach im Gehäuse des Ventils integriert werden kann.

Beispielsweise mündet die untere Stirnseite des Hilfskolbens in einen Ventilraum, der mit dem Verbindungskanal des zweiten Ventilraumes in Verbindung steht. Damit wird ein automatisch durch den im zweiten Ventilraum herrschenden Druck wirkendes Rückschlagventil geschaffen. Durch die auch nur geringe Druckdifferenz zwischen diesem Ventilraum des Hilfskolbens und dem darüber liegenden zweiten Ventilraum, verursacht durch die Zuleitung zum zweiten Ventilraum, wird bereits eine genügende Schliesskraft erzielt, die den Hilfskolben nach oben drückt, sobald sich auf dieser Seite ein höherer Druck aufbaut als im Bereich des ersten Ventilraumes resp. des Kanals des Kolbens und damit die Rückschlagsicherung aktiviert, d.h. das Ventil selbsttätig geschlossen.

Beispielsweise ist die Wirkfläche an der untern Stirnseite des Hilfskolbens in seiner unteren Endstellung gleich gross oder kleiner als die Wirkfläche der oberen Stirnseite. Damit verbleibt der Hilfskolben bei ausgeglichenem Druckverhältnissen sicher in seiner unteren Endstellung und erlaubt damit, dass das Ventil geöffnet wird und bleibt. Erst bei Vorliegen einer höheren Druckdifferenz, als es dem Verhältnis dieser beiden Flächen entspricht, wird der Hilfskolben nach oben bewegt und schliesst das Ventil.

Beispielsweise ist im Ventilraum der unteren Stirnseite des Hilfskolbens ein Federmittel angeordnet, welches federnd gegen die untere Stirnseite des Hilfskolbens in Anschlag steht. Zur Unterstützung der Schliesswirkung des Hilfskolbens, d.h. der Bewegung in Richtung des Kolbens, kann zusätzlich eine Feder eingebaut sein, die insbesondere in drucklosem Zustand das Ventil zuverlässig geschlossen hält, unabhängig von der Position des Kolbens.

Beispielsweise ist in der Zuleitung zum ersten Ventilraum ein Rückschlagventil angeordnet ist, vorzugsweise ein rein druckgesteuertes Rückschlagventil. Auch im Bereich des ersten Ventilraumes kann ein Rückschlagventil angeordnet sein.

Erfindungsgemäss werden die Ventile als Vorblasventil, Hauptblasventil, Sparventil oder Entlüftungsventil von Hohlkörperblasmaschinen eingesetzt. Dabei kann dasselbe Ventilprinzip für die unterschiedlichen Ventilfunktionen eingesetzt werden, was den Aufbau von Blasblöcken, d.h. zu einem Block zusammengefassten Ventilanordnungen, vereinfacht. Vorteilhaft können diese Ventile mit parallel zueinander verlaufenden, vorzugsweise in dieselbe Richtung weisenden Zu- resp. Ableitungen ausgerüstet sein.

Ausführungsbeispiele der vorliegenden Erfindung werden nachstehend anhand von Figuren noch näher erläutert. Es zeigen
Fig. 1 schematisch den Längsschnitt durch ein erfindungsgemässes Ventil für den Einsatz als Hochdruckventil, in geschlossener Stellung;
Fig. 2 schematisch den Druckverlauf über der Zeit des Blasprozesses einer Hohlkörperblasmaschine;
Fig. 3 schematisch den vereinfachten Längsschnitt eines Vorblasventils für einen Prozess gemäss Figur 2 in geschlossener Stellung;
Fig. 4 den Längsschnitt nach Figur 3 in geöffneter Stellung mit deaktiviertem Rückschlagventil;
Fig. 5 den Längsschnitt nach Figur 3 in geöffneter Stellung mit aktiviertem Rückschlagventil;
Fig. 6 schematisch den vereinfachten Längsschnitt durch ein erfindungsgemässes Ventil für den Einsatz als Hochdruckventil in geschlossener Stellung;
Fig. 7 den Längsschnitt nach Figur 6 in geöffneter Stellung;
Fig. 8 schematisch den vereinfachten Längsschnitt durch ein erfindungsgemässes Ventil für den Einsatz als Sparventil mit zusätzlichem Rückschlagventil, in geschlossener Stellung;
Fig. 9 den Längsschnitt nach Figur 8 in geöffneter Stellung mit offenem Rückschlagventil;
Fig. 10 den Längsschnitt nach Figur 9 in geöffneter Stellung mit geschlossenem Rückschlagventil;
Fig. 11 schematisch den vereinfachten Längsschnitt durch ein erfindungsgemässes Ventil als Entlüftungsventil in geschlossener Stellung;
Fig. 12 den Längsschnitt nach Figur 11 in offener Stellung;
Fig. 13 schematisch den vereinfachten Längsschnitt durch eine alternative Ausführungsform eines erfindungsgemässen Ventils in geschlossener Stellung;
Fig. 14 den Längsschnitt nach Figur 13 in offener Stellung; und
Fig. 15 schematisch den Längsschnitt durch den unteren Bereich einer Ventildichtung nach Figur 1 in einer speziellen Ausführungsform.

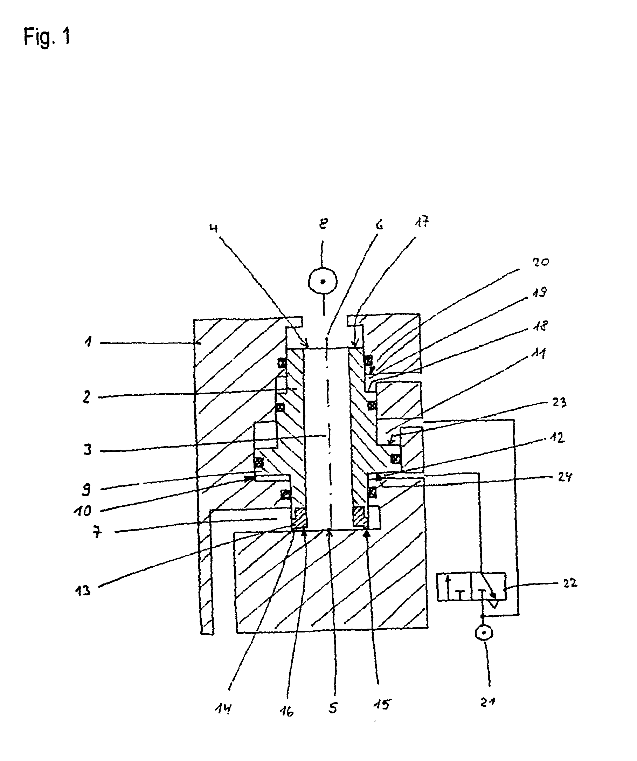

In Figur 1 ist rein schematisch der Längsschnitt durch ein erfindungsgemässes Ventil dargestellt. Im Gehäuse 1 ist längsverschiebbar ein Kolben 2, als Ringkolben mit einem mittig angeordneten, zwischen den beiden Stirnseiten 4 resp. 5 des Kolbens 2 durchgehenden Kanal 3, ausgebildet.

Die obere Stirnseite 4 des Kolbens 2 mündet in einen ersten Ventilraum 6 der ebenfalls im Gehäuse 1 ausgebildet ist und beispielsweise über eine Druckleitung 7 mit einer externen Druckquelle 8 verbunden ist.

Die untere Stirnseite 5 des Kolbens 2 mündet in einen zweiten Ventilraum 7, der beispielsweise über einen ebenfalls im Gehäuse 1 angeordneten Verbindungskanal 8 mit einer druckluftbetätigten Vorrichtung verbunden ist, beispielsweise dem Blaszylinder einer Hohlkörperblasmaschine (nicht dargestellt).

Weiter weist der Kolben 2 im seinem mittleren Bereich einen radial nach Aussen abstehenden Kolbenring 9 auf, der in einen Ringraum 10 des Gehäuses mündet und diesen Ringraum 10 in zwei Steuerkammern untereilt, einer ersten, in Figur 1 oberen Steuerkammer 11 und einer zweiten, in Figur 1 unteren Steuerkammer 12.

An der Aussenseite des Kolbens 2 resp. der Innenwand der entsprechenden Kolbenöffnung des Gehäuses 1 sind mehrere Dichtungsringe oder Dichtungspackungen angeordnet, um die Ventilräume 6 resp. 7 gegeneinander resp. gegen die Steuerkammern 11 resp. 12 abzudichten.

Der Kolben 2 ist vorteilhaft in der Form als Ringkolben derart ausgebildet, dass der Kanal 3 einen möglichst grossen Durchmesser aufweist und dass der Querschnitt des Kanals 3 zwischen den beiden Stirnflächen 4 resp. 5 konstant ist und geradlinig, vorteilhaft koaxial zur Längsachse des Kolbens 2 verläuft.

In der in Figur 1 dargestellten Ausführungsform ist an der unteren Stirnfläche 5 des Kolbens 2 eine Ventildichtung 13 angeordnet. Diese Ventildichtung 13 weist an ihrer Stirnseite eine Schliessfläche 14 auf, die in geschlossenem Zustand des Kolbens 2 gegen eine entsprechend ausgebildete Sitzfläche 15 am Boden des unteren Ventilraumes 7 in dichtendem Anschlag steht. Damit ist die Verbindung zwischen dem unteren Ventilraum 7 und damit dem Verbindungskanal 8 und dem oberen Ventilraum 6 resp. der Druckleitung 7 unterbrochen und das Ventil geschlossen.

Die Ventildichtung 13 weist nun weiter eine Wirkfläche 16 auf, d.h. eine zwischen der Innenwand der Schliessfläche 14 und der Innenwand des Kanals 3 angeordnete Fläche, die kleiner ist, als die Wirkfläche 17 der oberen Stirnseite 4 des Kolbens 2. Damit wird der Kolben 2 durch die Differenz zwischen den beiden Wirkflächen 16 und 17 durch die Druckkraft des im ersten Ventilraum 6 und damit auch im Kanal 3 herrschenden Druckes nach unten gedrückt und selbständig in der Schliesslage gehalten.

Es ist für den Fachmann klar, dass diese Ruhestellung beispielsweise durch Anordnung einer in Schliessrichtung wirkenden Feder unterstützt werden kann, so dass das Ventil auch in drucklosem Zustand zuverlässig in der geschlossenen Stellung verbleibt.

Die Ventildichtung 13 ist vorteilhaft aus einem verschleissarmen, möglichst starren Material gefertigt und als separates Teil am Kolben 2 angeordnet.

Als Material kommt beispielsweise ein hochfester und möglichst temperaturbeständiger Kunststoff in Frage, der als weiterer Vorteil eine Dämpfung bei einer raschen Schliessbewegung des Kolbens 2 aufweist und damit einerseits eine hohe Schliessgeschwindigkeit erlaubt und andererseits eine hohe Verschleissfestigkeit aufweist.

Alternativ kann die Ventildichtung 13 auch als integrierter Bestandteil direkt an der unteren Stirnfläche 5 des Kolbens 2 ausgebildet sein.

Um die Bewegung des Kolbens 2 beim Öffnen zu begrenzen, ist vorteilhaft an der Aussenseite des Kolbens 2 eine Anschlagkante 18, beispielsweise als Ringfläche, ausgebildet, die in einem entlüfteten Raum, d.h. einem Raum, der mit der Umgebung in Verbindung steht und damit druckfrei ist, gegen eine Anschlagfläche 20 bewegt werden kann.

Es ist für den Fachmann klar, dass das Gehäuse 1 entsprechend der Form und dem Aufbau des Kolbens 2 einteilig oder mehrteilig ausgeführt sein kann, lediglich der Einfachheit halber wird das Gehäuse 1 in den Figuren als einteilig dargestellt.

Für die Ansteuerung des Kolbens 2 sind die beiden Steuerkammern 11 und 12 mit einer Steuerdruckquelle 21 verbunden. So ist beispielsweise die obere Steuerkammer 11 direkt mit der Steuerdruckquelle 21 verbunden und die untere Steuerkammer 12 über ein Steuerventil 22 mit der Steuerdruckquelle 21 verbunden. In der geschlossenen Stellung des Ventils ist das Steuerventil 22 geschlossen und derart ausgelegt, dass in dieser geschlossenen Stellung die untere Steuerkammer 12 mit der Umgebung kommunizierend verbunden ist, d.h. entlüftet ist. Damit steht die obere Steuerkammer 11 unter Druck und die untere Steuerkammer 12 ist entlüftet, was den Kolben 2 über die erste Wirkfläche 23 in seiner geschlossenen Stellung hält.

Die erste Wirkfläche 23 ist dabei geometrisch kleiner als die zweite Wirkfläche 24 des Kolbenringes 9 in der unteren Steuerkammer 12.

Wenn nun das Steuerventil 22 geöffnet wird, wird die untere Steuerkammer 12 ebenfalls mit der Steuerdruckquelle 21 verbunden, wodurch sich eine Differenzkraft zwischen der Steuerkammer 12 und 11 mit Wirkung nach oben einstellt.

Wenn diese Differenzkraft nun die Haltekraft des Kolbens durch den Anpressdruck der Differenz der Wirkflächen 16 und 17 der Stirnseiten 4 und 5 des Kolbens 2 überwindet, löst sich der Kolben 2 resp. die Schliessfläche 14 von der Sitzfläche 15 und der Kolben 2 wird nach oben bewegt. Durch die geometrische Auslegung der Stirnflächen 4 und 5 des Kolbens 2 resp. der entsprechenden Wirkflächen werden nun unmittelbar nach dem Abheben der Ventildichtung 13 praktisch gleich grosse Wirkflächen gebildet. Damit wird lediglich ein kleiner Kraftaufwand für eine schnelle, vollständige Öffnung des Ventils, d.h. vollständige Bewegung des Kolbens 2 in seine obere Endlage, benötigt.

Durch die aussenliegende Anordnung der Wirkflächen 23 resp. 24 des Kolbenringes 9 und des möglichen grossen Querschnittes des Kanals 3 des Kolbens 2 kann daher die Steuerung des Kolbens 2 mit verhältnismässig kleinem Steuerdruckniveau erfolgen. Dies wiederum erlaubt den Einsatz von kleinen und damit auf kostengünstigen Steuerventilen 22 auf für die Ansteuerung von schnellschliessenden Ventilen mit Druckquellen 8 mit hohem Druckniveau.

Ein weiterer Vorteil dieser Ventilanordnung besteht weiter darin, dass für eine zuverlässige Funktion des Ventils, d.h. für das Öffnen und Schliessen des Kolbens 2, kein Arbeitsdruck seitens der externen Druckquelle 8 notwendig ist, d.h. das Ventil arbeitet selbst mit sehr kleinen Steuerdruckniveau. Da keine Druckdifferenz zwischen dem ersten Ventilraum 6 und dem zweiten Ventilraum 7 notwendig ist, kann das Ventil auch gesteuert werden, wenn die beiden Ventilräume 6 und 7 praktisch ohne Druck sind oder dasselbe Druckniveau aufweisen.

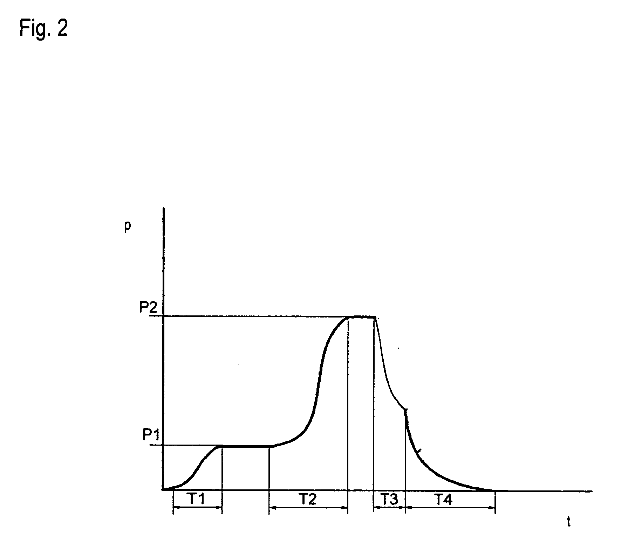

Diese Eigenschaft macht den Einsatz gerade für Hohlkörperblasmaschinen besonders geeignet, wie an den nachfolgenden Ausführungsbeispielen noch näher dargestellt wird. In Figur 2 ist der typische Druckverlauf über der Zeit für einen Blasprozess beispielsweise für die Herstellung von PET-Flaschen aufgezeigt.

Während einer ersten Zeitperiode T1 wird über ein Vorblasventil ein Vorblasdruck (typischer Bereich zwischen 2 und 20 bar) bis auf das Niveau P1 in den Blaszylinder eingeblasen und kurz gehalten. Danach wird während der Zeitperiode T2 über ein Hauptblasventil der Hauptblasdruck (typischerweise bis zu 40 bar; aber immer höher als der Vorblasdruck P1) bis auf das Niveau P2 eingeblasen und ebenfalls für eine kurze Zeitspanne gehalten. Das Ablassen des Druckes erfolgt nun ebenfalls zweistufig, nämlich in einer ersten Stufe während der Zeitperiode T3 als sogenanntes Sparen oder Rekuperieren, wo der Druck in das Vorblasdrucksystem oder ein anderes Drucksystem mit tieferem Druckniveau als P2 ausgeblasen wird und direkt anschliessend der Restdruck in der Zeitperiode T4 in die Umgebung ausgeblasen wird, um den Blaszylinder und die Flasche druckfrei zu machen.

Diese vier Stufen werden herkömmlicherweise häufig über vier hierfür speziell ausgelegte Ventile gesteuert, die in einem sogenannten Blasblock zusammengefasst und in möglichst unmittelbarer Nähe des Blaszylinders angeordnet sind. Das erfindungsgemässe Ventil lässt sich nun universell mit nur leichten Modifikationen für alle vier Stufen einsetzen, wie anhand der nachfolgenden Beschreibung noch dargestellt wird. Da das Ventil sehr kurze Schliess- und Öffnungszeiten aufweist und auch ohne Druckdifferenz zwischen Eingang und Ausgang geschaltet werden kann, kann beispielsweise der Sparprozess bis nahe an den Vorblasdruck P1 heran gefahren werden und durch die grossen Öffnungsquerschnitte und schnelle Schaltzeiten kann die gesamte Prozessdauer positiv beeinfluss, d.h. verkürzt werden.

Weiter kann das Ventil mit einem einfachen Steuerventil 22 betrieben werden, welches entweder mit dem Vorblasdruck P1 oder einem davon unabhängigen Steuerdruck PP gespiesen wird, der ein geringeres Niveau als der Vorblasdruck P2 aufweisen kann. Derartige Ventile sind aus der Massenproduktion erhältlich und haben damit einen positiven Einfluss auf die Gesamtkosten des Blasblockes.

Ein weiterer grosser Vorteil ist darin zu sehen, dass das Ventil auch klar definierte Noteigenschaften aufweist, d.h. dass selbst bei Unterbruch des Steuerdrucks PP eine definierte offene oder geschlossenen Position des Kolbens 2 eingestellt bleibt oder im Falle eines Druckanstiegs im Arbeitsdrucksystem selbständig eingestellt wird, so dass keine gefährlichen Überdruck-Situationen entstehen können. Da der Steuerdruck PP in der Regel bei derartigen Vorrichtungen mittels Druckregler vom Hauptblasdruck P2 abgenommen wird, bleibt selbst bei einem vollständigen Ausfall des Hauptblasdruckes P2 die Position des entsprechenden Ventils vorbestimmt und definiert. Dies kann beispielsweise bei einem Notabschalten der Vorrichtung der Fall sein oder bei einem Leitungsbruch in der Versorgungsleitung des Hauptblasdruckes.

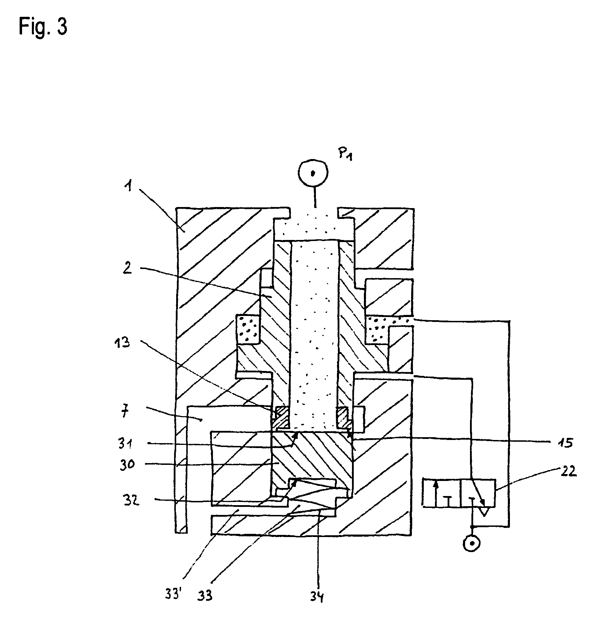

Fig. 3 zeigt nun rein schematisch im Längsschnitt eine Ausführungsvariante des erfindungsgemässen Ventils, die sich als Vorblasventil während der Zeitperiode T1 gemäss

Figur 2 eignet. In Abweichung zur Ausführung gemäss Figur 1 weist das Ventil im unteren Bereich des Gehäuses 1 einen koaxial zum Kolben 2 bewegbaren Hilfskolben 30 auf.

Dieser Hilfskolben 30 weist an seiner oberen Stirnseite 31 den Ventilsitz 15 für die Ventildichtung 13 auf. Die untere Stirnseite 32 mündet in einen Ventilraum 33 und ist beispielsweise gegen eine Druckfeder 34 abgestützt. Der Ventilraum 33 ist seinerseits über einen Kanal 33' mit dem unteren Ventilraum 7 verbunden.

Bei geschlossenem Steuerventil 22 ist der Kolben 2 in seiner unteren, geschlossenen Endlage positioniert und die Ventildichtung 13 steht gegen den Ventilsitz 15 in Anschlag. Damit wird der an der Ventileingangsseite anliegende Vorblasdruck P1 gegen den Ventilraum 7 abgedichtet.

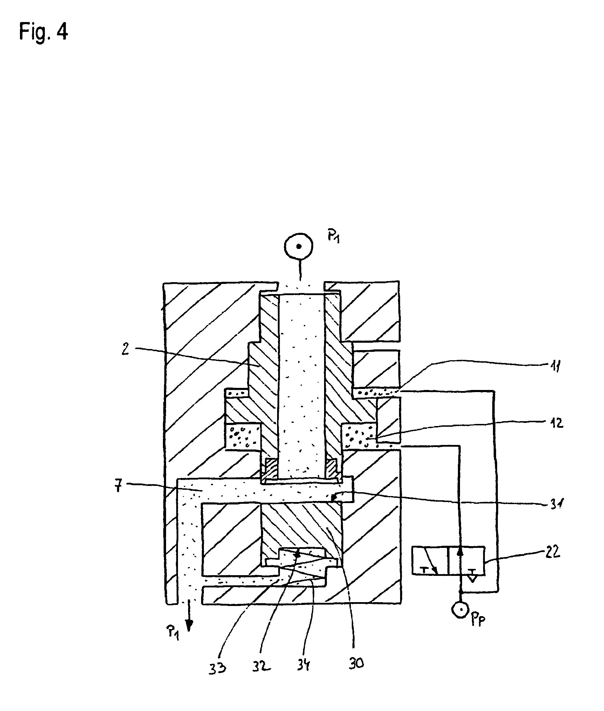

Wenn nun das Steuerventil 22 geöffnet wird, wie in Figur 4 dargestellt, wird der Kolben 2 in seine obere, geöffnete Position verschoben, da durch den Steuerdruck PP eine Differenzkraft zwischen den beiden Steuerkammern 11 und 12 aufgebaut ist. Damit kann nun der Vorblasdruck P1 durch den Kolben 2 zum Ventilraum 7 hindurchströmen und schliesslich zum Blaszylinder (nicht dargestellt) gelangen. Der Hilfskolben 30 verbleibt in seiner unteren Position, da die obere Stirnseite 31 eine grössere Fläche als die untere Stirnseite 32 aufweist, womit durch denselben herrschenden Druck im Ventilraum 7 und im Ventilraum 33 eine nach unten wirkende Kraft resultiert. Die Druckfeder 34 ist derart ausgelegt, dass ihre Druckkraft kleiner ist als diese genannte, resultierende Druckkraft auf den Hilfskolben 30.

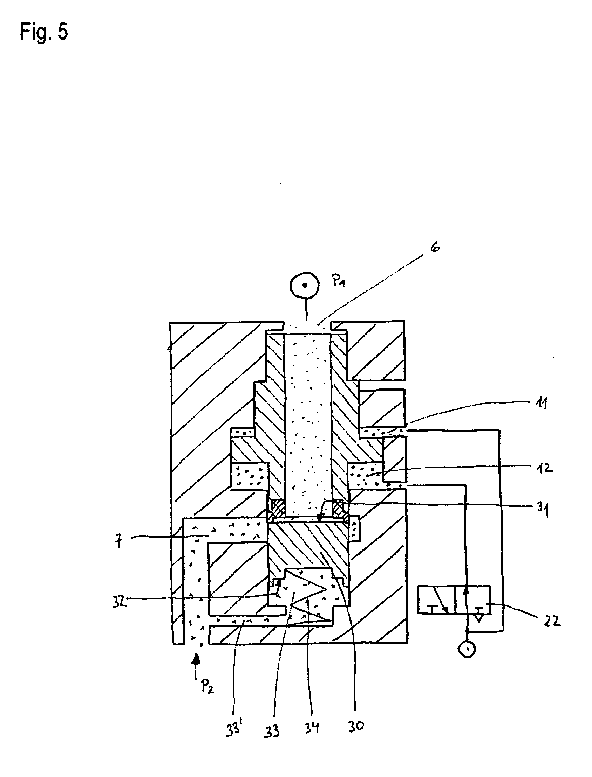

Wird nun nach dem Ende der Vorblaszeit T1 der Hauptblasvorgang T2 eingeleitet, so steigt der Druck in der Zuleitung zum Blaszylinder und damit auch in der Zuleitung zum Ventilraum 7 des Vorblasventils, wie in Figur 5 dargestellt. Selbstverständlich liegt nicht sofort der volle Hauptblasdruck P2 an, aber der Druck erhöht sich über den Druck P1 hinaus.

Da der Kanal 33' des Ventilraums 33 zuerst mit diesem erhöhten Druck beaufschlagt wird, entsteht im Ventilraum 33 gegenüber dem Ventilraum 7 ein kleiner Überdruck, der in der dargestellten Konfiguration zusammen mit der Feder 34 den Hilfskolben 30 von seiner unteren Position abhebt und nach oben bewegt. Damit wird nun auch die Wirkfläche der unteren Stirnseite 32 vergrössert, beispielsweise auf dieselbe Grösse wie die obere Stirnfläche 31, wodurch sich der Hilfskolben 30 allein aufgrund der Federkraft der Druckfeder 34 nach oben in Anschlag gegen den Kolben 2 bewegt und damit das Ventil schliesst.

Diese Schliessbewegung erfolgt ohne Aktivierung, d.h. ohne Schliessen des Steuerventils 22 automatisch aufgrund des Druckverlaufs gemäss Figur 2.

Wenn nun das Steuerventil 22 betätigt wird, d.h. geschlossen wird und damit der untere Steuerraum 12 drucklos wird, bleibt das Ventil unabhängig von der Lage resp. Position des Kolbens 2 geschlossen, zumindest solange als der untere Ventilraum 7 resp. der Ventilraum 33 nicht vollständig drucklos werden resp. solange hier ein Überdruck gegenüber P1 herrscht. Weiter wird der Kolben 2 zusammen mit den Hilfskolben 30, nach wie vor in der geschlossenen Position, nach unten in die Ausgangslage gemäss Figur 3 verschoben, sobald der im Steuerraum 11 herrschende Steuerdruck PP den Druck der Ventilkammer 33 überwindet, zusätzlich unterstützt durch den Vorblasdruck P1 im Ventilraum 6.

Der Hilfskolben 30 arbeitet somit als selbsttätiges Rückschlagventil in Bezug auf die Zuleitung zum Ventilraum 7.

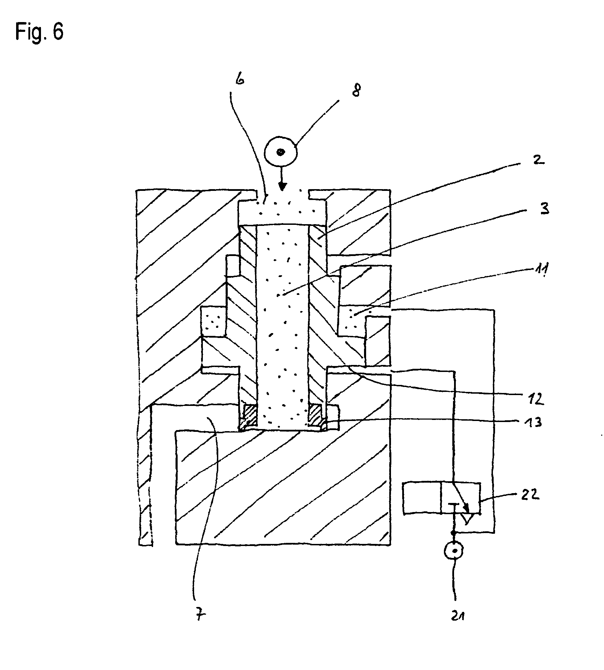

Figur 6 zeigt nun schematisch den vereinfachten Längsschnitt eines erfindungsgemässen Ventils analog der Figur 1 für den Einsatz als Hauptblasventil. Dieses Hauptblasventil steuert die Zufuhr des Hauptblasdruckes P2 beispielsweise zum Blaszylinder einer Hohlkörperblasmaschine entsprechend dem Zeitraum T2 gemäss Figur 2.

Wie bereits anhand von Figur 1 beschrieben, wird die Zufuhr des Hauptblasdruckes P2 in den Ventilraum 7 durch den geschlossenen Kolben 2 unterbrochen, dies bei geschlossenem Steuerventil 22.

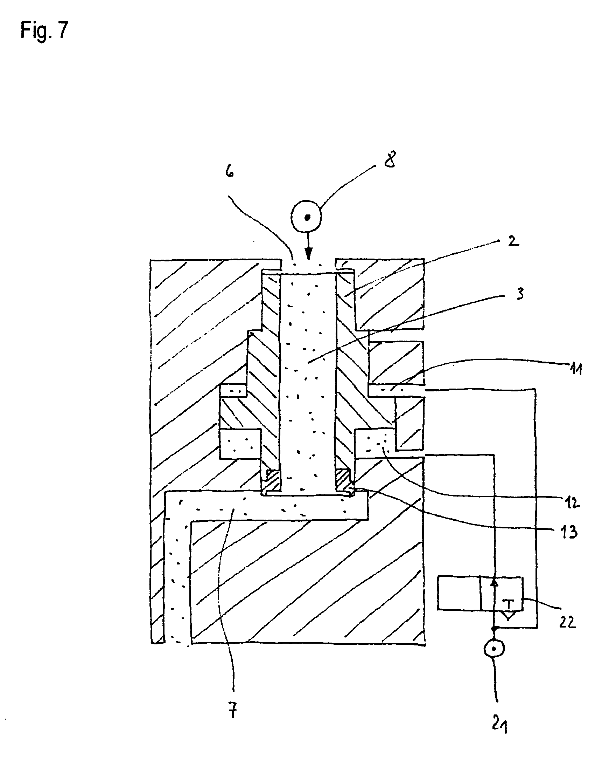

Figur 7 zeigt nun das Ventil nach Figur 6 in geöffnetem Zustand. Durch das Oeffnen des Steuerventils 22 wird, wie bereits bei der Beschreibung von Figur 4 dargestellt, der Kolben 2 nach oben in seine obere, geöffnete Position bewegt und der Hauptblasdruck P2 kann durch das Ventil hindurch in den Ventilraum 7 und damit in den damit verbundenen Blaszylinder (nicht dargestellt) strömen. Durch die schnellen Öffnungs- resp. Schliesszeiten des Kolbens können sehr steile Blaskurven (gemäss Figur 2) erzielt werden und damit die Blaszeit T2 verkürzt werden.

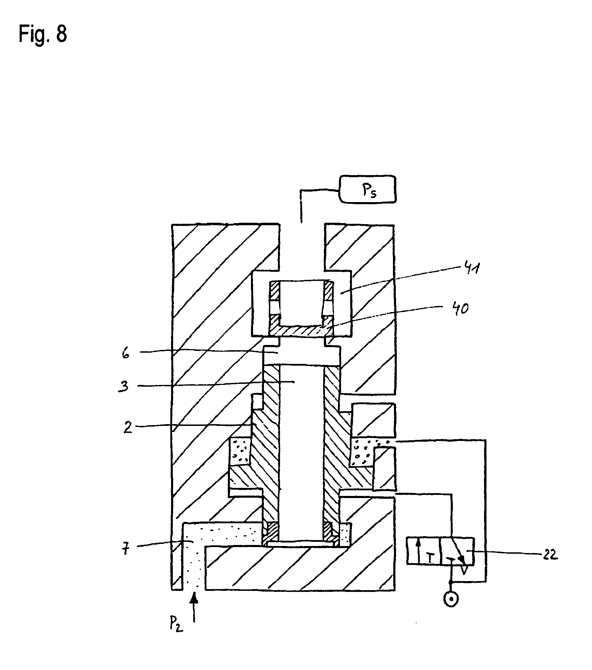

In Figur 8 ist weiter vereinfacht schematisch der Längsschnitt eines erfindungsgemässen Ventils analog der Figur 1 für den Einsatz als Sparventil dargestellt. Ein solches Ventil dient dazu, den im Blaszylinder und der Flasche einer Hohlkörperblasmaschine befindlichen Druck vom Niveau des Hauptblasdruckes P2 in den Bereich des Niveaus des Vorblasdruckes P1 zu reduzieren und entweder einem separaten Sparluftbehälter resp. Sparluftsystem PS zuzuführen oder direkt in das Vorblassystem zurückzuführen.

Da ein solches Ventil während dem Vorblas- und Hauptblasvorgang geschlossen bleiben muss, wird hier wiederum die gleiche Anordnung wie bereits in Figur 1 dargestellt eingesetzt, d.h. einem bei geschlossenen Steuerventil 22 geschlossenen Kolben 2. Der Kolben 2 bleibt dabei auch bei anliegendem hohem Hauptblasdruck P2 im unteren Ventilraum 7 geschlossen.

Oberhalb des oberen Ventilraumes 6 ist nun ein Rückschlagventil, beispielsweise in Form eines in einem Ventilraum 41 angeordneten Hilfskolbens 40, angeordnet, das beispielsweise mit dem Sparluftsystem PS verbunden ist. Der Hilfskolben 40 ist hier rein schematisch als koaxial zum Kolben 2 verschiebbar angeordneter Schliesskolben in der geschlossenen Position dargestellt. Der Hilfskolben 40 wird durch den herrschenden Druck PS des Sparluftsystems in dieser geschlossenen Lage gehalten. Selbstverständlich kann diese Schliessstellung auch durch eine Feder (nicht dargestellt) unterstützt werden.

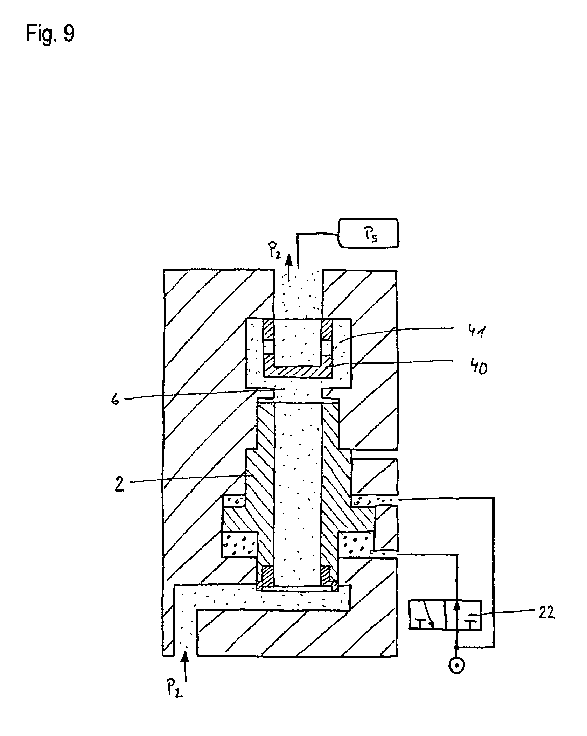

Am Ende des Hauptblasprozesses wird nun in der Zeitperiode T3 nach Figur 2 dieses Sparventil durch Öffnen des Steuerventils 22 geöffnet, wie dies in Figur 9 dargestellt ist.

Der Öffnungsprozess ist dabei identisch zum bereits beschriebenen Öffnungsvorgang des erfindungsgemässen Ventils. Damit gelangt nun der Hauptblasdruck P2 in den oberen Ventilraum 6 und drückt damit den Hilfskolben 40 nach oben, so dass die Verbindung zum Sparluftsystem PS geöffnet wird. Damit kann nun der Druck P2 in das Sparluftsystem PS einströmen, bis der Hilfskolben 40 wieder geschlossen wird.

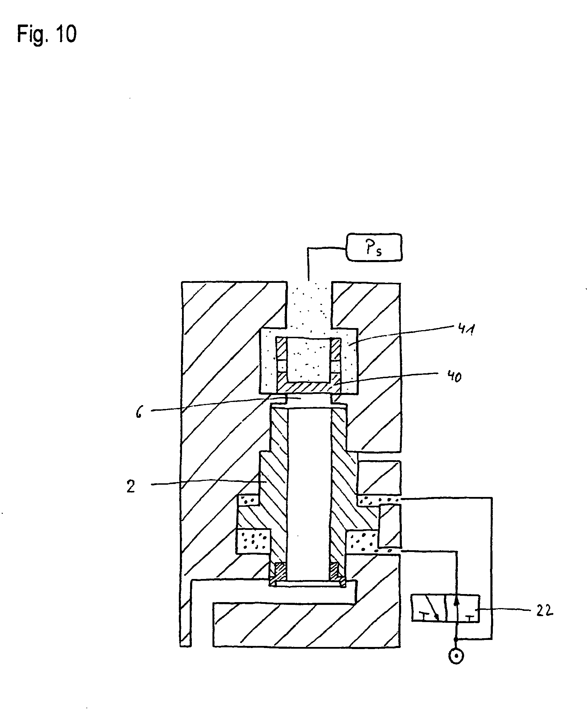

In Figur 10 ist dieser Zustand nach dem erneuten Schliessen des Hilfskolbens 40 dargestellt, welcher dann erreicht wird, wenn die Schliesskraft des Hilfskolbens 40 die Öffnungskraft des durch das Abfliessen aus dem Blaszylinder und dem Flaschenvolumen sich reduzierenden Druckes im oberen Ventilraum übersteigt. Vorteilhaft wird der Hilfskolben 40 derart ausgelegt, dass dies bei einem Druckunterschied von ca. 1 bar zwischen dem reduzierten Hauptblasdruck und dem Spardruck PS der Fall ist. Auch hier erfolgt die Bewegung des Hilfskolbens 40 automatisch und unabhängig vom Steuerventil 22.

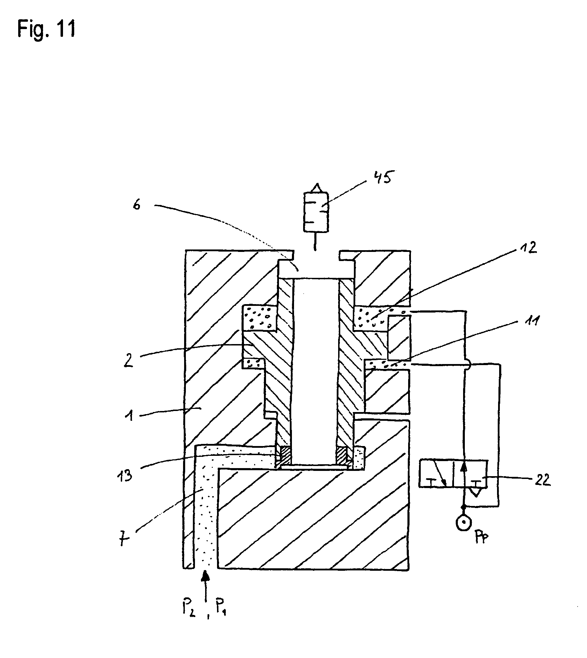

In Figur 11 ist weiter schematisch der vereinfachte Längsschnitt eines erfindungsgemässen Ventils für den Einsatz als Entlüftungsventil dargestellt. Im Unterschied zu den bisher dargestellten Ventilfunktionen soll dieses Ventil bei geschlossenem Steuerventil 22 geöffnet sein. Damit wird eine Notöffnung des Entlüftungsventils beispielsweise bei einem Druckverlust der Steuerdruckversorgung PP erreicht.

Um dies zu erreichen, wird die Anordnung der Steuerkammern 11 und 12 im Verhältnis zur Ventildichtung 13 des Kolbens 2 umgekehrt, d.h. die grösser Wirkfläche der Steuerkammer 12 ist in Figur 11 oberhalb der Steuerkammer 11 angeordnet, so dass bei geöffnetem Steuerventil 22, d.h. bei gleichzeitiger Versorgung der beiden Steuerkammern 11 und 12 mit dem Steuerdruck PP der Kolben 2 in der unteren, geschlossenen Stellung gehalten wird. Damit kann der im Ventilraum 7 herrschende Druck, beispielsweise der Vorblasdruck P1 oder der Hauptblasdruck P2, nicht durch den Kolben 2 und den oberen Ventilraum 6 beispielsweise über einen Schalldämpfer 45 in die Umgebung gelangen.

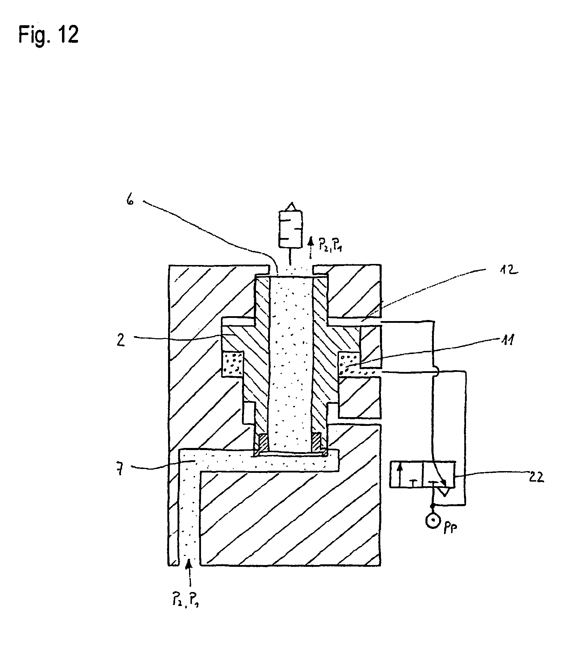

Sobald nun das Steuerventil 22 geschlossen wird, in der Regel während der Ausblasperiode T4 gemäss Figur 2, wird das Ventil geöffnet, wie in Figur 12 dargestellt ist. Durch den im Steuerraum 11 herrschenden Steuerdruck PP wird der Kolben 2, allenfalls unterstützt durch den Druck im Ventilraum 7 auf eine nach innen schräg verlaufende Fläche an der Aussenseite der Ventildichtung 13 ,nach oben in seine offene Position bewegt und der Druck im Ventilraum 7 kann über den Kanal 3 im Kolben 2 an die Umgebung abgegeben werden.

Diese Öffnung erfolgt aber auch in einem Notfall, wenn beispielsweise die Ansteuerung des Steuerventils 22 ausfällt.

Wie für den Fachmann klar aus der Darstellung der beiden Figuren 11 und 12 hervorgeht, kann dieses Ventil dadurch realisiert werden, dass die Ventildichtung 13 an der oberen Stirnseite 4 des Kolbens 2 nach Figur 1 angeordnet wird und die Anschlüsse der beiden Steuerkammern 11 und 12 am Steuerventil 22 vertauscht werden. Damit können alle dargestellten Ventilvarianten grundsätzlich mit demselben Aufbau des Gehäuses 1 resp. des Kolbens 2 ausgeführt werden, was deren Anordnung in einem Ventilblock, beispielsweise für den Einsatz an einer Hohlkörperblasmaschine, besonders vorteilhaft macht, da nur wenige unterschiedliche Teile benötigt werden.

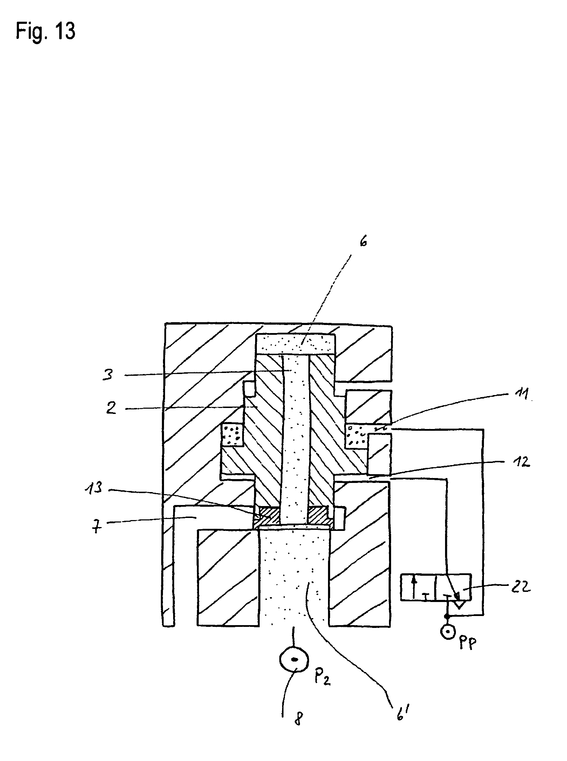

In Figur 13 ist nochmals eine weitere Ausführungsvariante eines erfindungsgemässen Ventils schematisch im vereinfachten Längsschnitt dargestellt. Der Aufbau des Kolbens 2 und seiner Steuerkammern 11 resp. 12 ist wiederum identisch zur Ausführungsform nach Figur 1 ausgeführt. Im Unterschied dazu ist hier der obere Ventilraum 6 als geschlossener Raum ausgebildet, dafür befindet sich unterhalb des Kolbens 2, gegenüberliegend zur unteren Stirnseite 5 ein zusätzlicher Ventilraum 6', der mit der externen Druckquelle 8 verbunden ist.

Der Ventilraum 6 ist über den Kanal 3 des Kolbens 2 mit dem Ventilraum 6' und damit der Druckquelle 8 verbunden. Die geometrischen Verhältnisse an der oberen Stirnseite 4 und der unteren Stirnseite 5 des Kolbens 2 sind wiederum identisch zur Ausführung gemäss Figur 1. Somit wird der Kolben 2 entsprechend bei geschlossener Stellung des Steuerventils 22 in der geschlossenen Position gehalten.

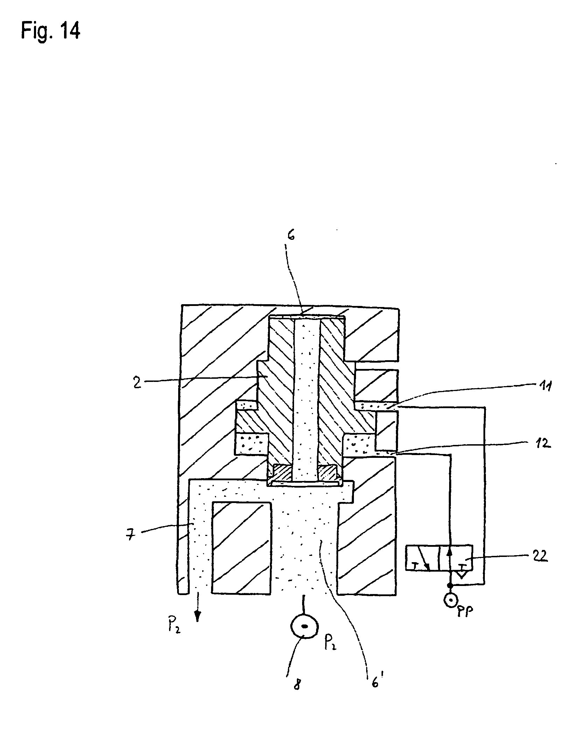

Beim Öffnen des Steuerventils 22 wird wiederum analog der Kolben 2 in seine obere, geöffnete Position verschoben, wie in Figur 14 dargestellt ist. Damit ist der Weg vom Ventilraum 6' direkt zum Ventilraum 7 geöffnet. Auch hier wird der obere Ventilraum 6 nicht vollständig geschlossen, so dass die analogen Druckverhältnisse am Kolben 2 herrschen, wie bereits bei der Ausführungsform nach Figur 1 beschrieben worden ist.

Ein Vorteil dieses Ausführungsform ist darin zu sehen, dass der Kanal 3 des Kolbens 2 kleiner dimensioniert sein kann, als bei der Variante nach Figur 1, da er nicht als Durchflusskanal dient sondern lediglich als Druckausgleichkanal zum Ventilraum 6. Damit lassen sich auch die Durchmesser des Kolbens 2 verkleinern, was insgesamt zu kleineren Dimensionen des Ventilaufbaues führt.

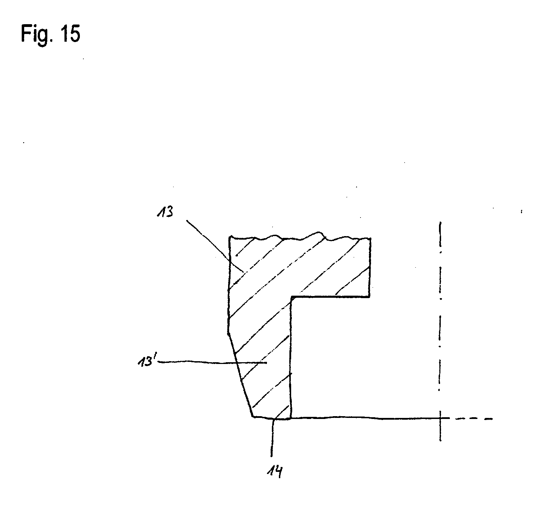

Figur 15 zeigt schliesslich noch einen Ausschnitt des Schliessbereiches einer Ventildichtung 13 in der Ausführungsform mit in Richtung der Schliessfläche 14 radial nach Innen geneigter Aussenfläche des Flansches 13'.

## Patentansprüche

1. Ventil mit einem Gehäuse (1); einem Kolben (2), der zwischen zwei Endstellungen längsverschiebbar im Gehäuse (1) angeordnet ist, wobei die erste Stirnfläche (4) des Kolbens (2) in einen ersten Ventilraum (6) mündet und die zweite Stirnfläche (5) des Kolbens (2) in einen zweiten Ventilraum (7) mündet, wobei der erste und zweite Ventilraum (6;7) über im Gehäuse (1) angeordnete Verbindungskanäle mit externen Druckleitungen resp. Druckquellen (8) verbindbar sind; wobei der Kolben (2) einen die beiden Stirnflächen (4; 5) verbindenden Kanal (3) konstanten Durchmessers aufweist und einen aussen am Kolben (2) radial nach Aussen abragenden, zwischen den beiden Stirnflächen (4;5) des Kolbens (2) angeordneten Kolbenring (9) aufweist, der seinerseits in eine Kammer (10) des Gehäuses (1) mündet und diese Kammer (10) in eine erste Steuerkammer (11) und eine zweite Steuerkammer (12) teilt, **dadurch gekennzeichnet, dass** an einer der beiden Stirnseiten (5) eine ringförmige axial ausgerichtete Ventildichtung (13) angeordnet ist, deren Stirnfläche (14) die Schliessfläche des Kolbens (2) bildet und in geschlossenem Zustand des Kolbens (2) gegen eine Sitzfläche (15) des entsprechenden Ventilraumes (7) in Anschlag steht, und dass der Kanal (3) im Innern des Kolbens (2) bezüglich der Ventildichtung (13) derart dimensioniert und angeordnet ist, dass in geschlossenem Zustand des Kolbens (2) im Bereich der Ventildichtung (13) eine gegen die Schliessrichtung wirkende Wirkfläche (16) gebildet ist, die kleiner ist als die Wirkfläche (17) der gegenüberliegenden Stirnseite (4) des Kolbens (2), und dass in geöffnetem Zustand des Kolbens (2) jeweils stirnseitige Wirkflächen des Kolbens (2) gleich sind, sowie dass eine erste Wirkfläche (23) des Kolbenringes (9) in der ersten Steuerkammer (11) kleiner ist als eine zweite Wirkfläche (24) des Kolbenringes (9) in der zweiten Steuerkammer (12), wobei die erste Steuerkammer (11) über eine erste Steuerdruckleitung mit einem Steuerdruckreservoir (21) konstanten Drucks in Verbindung steht und die zweite Steuerkammer (12) über ein Steuerventil (22) schaltbar entweder mit der Umgebung oder mit dem Steuerdruckreservoir (21) in Verbindung steht.

2. Ventil nach Anspruch 1, **dadurch gekennzeichnet, dass** die Ventildichtung (13) als Schliesskante einen runden Flansch (13') mit im wesentlicher gerader Schliessfläche (14) aufweist, wobei die Schliessfläche (14) vorzugsweise senkrecht zur Schliessrichtung des Kolbens (2) ausgerichtet ist.

3. Ventil nach Anspruch 2, **dadurch gekennzeichnet, dass** die Aussenfläche des Flansches (13') zur Schliessfläche (14) hin radial nach innen angeschrägt ausgeführt ist.

4. Ventil nach einem der Ansprüche 1 bis 3, **dadurch gekennzeichnet, dass** das der Kolben (2) und die Ventildichtung (13) einteilig aus einem Material, vorzugsweise aus Kunststoff, ausgebildet sind oder dass der Kolben (2) und die Ventildichtung (13) zweiteilig aus unterschiedlichen Materialien ausgebildet sind, wobei die Ventildichtung (13) vorzugsweise aus Kunststoff besteht.

5. Ventil nach einem der Ansprüche 1 bis 4, **dadurch gekennzeichnet, dass** der Kanal (3) zwischen den beiden Stirnflächen (4;5) des Kolbens (2) gerade und mit gleich bleibendem Querschnitt ausgebildet ist.

6. Ventil nach Anspruch 5, **dadurch gekennzeichnet, dass** der Querschnitt des Kanals (3) dem Querschnitt des Eintrittskanals in den ersten Ventilraum (6) entspricht.

7. Ventil nach einem der Ansprüche 1 bis 6, **dadurch gekennzeichnet, dass** der Aussendurchmesser des Kolbens (2) im Bereich seiner Stirnflächen (4;5) gleich gross ist.

8. Ventil nach einem der Ansprüche 1 bis 7, **dadurch gekennzeichnet, dass** der Ventilsitz (15) an der oberen Stirnseite (31) eines Hilfskolbens (30) angeordnet ist, welcher vorzugsweise koaxial zum Kolben (2) in den zweiten Ventilraum (7) bewegbar im Gehäuse (1) angeordnet ist und in der oberen Endlage des Kolbens (2) gegen die Ventildichtung (13) in Anschlag verschiebbar ist.

9. Ventil nach Anspruch 8, **dadurch gekennzeichnet, dass** die untere Stirnseite (32) des Hilfskolbens (30) in einen Ventilraum (33) mündet, der mit dem Verbindungskanal (33') des zweiten Ventilraumes (7) in Verbindung steht.

10. Ventil nach Anspruch 9, **dadurch gekennzeichnet, dass** die Wirkfläche an der untern Stirnseite (32) des Hilfskolbens (30) in seiner unteren Endstellung gleich gross oder kleiner ist als die Wirkfläche der oberen Stirnseite (31).

11. Ventil nach Anspruch 9 oder 10, **dadurch gekennzeichnet, dass** im Ventilraum (33) der unteren Stirnseite (32) des Hilfskolbens (30) ein Federmittel (34) angeordnet ist, welches federnd gegen die untere Stirnseite (32) des Hilfskolbens (30) in Anschlag steht.

12. Ventil nach einem der Ansprüche 1 bis 11, **dadurch gekennzeichnet, dass** in der Zuleitung zum ersten Ventilraum (6) ein Rückschlagventil (40) angeordnet ist, vorzugsweise ein rein druckgesteuertes Rückschlagventil (40).

13. Verwendung eines Ventils nach einem der Ansprüche 1 bis 12 als Vorblasventil, Hauptblasventil, Sparventil oder Entlüftungsventil von Blaszylindern von Hohlkörperblasmaschinen.

## Claims

1. A valve with a housing (1); a piston (2), which is arranged in the housing (1) longitudinally displaceably between two end positions, wherein the first end face (4) of the piston (2) terminates in a first valve chamber (6) and the second end face (5) of the piston (2) terminates in a second valve chamber (7), wherein the first and second valve chamber (6; 7) can be connected to external pressure lines and pressure sources (8) via connecting channels arranged in the housing (1); wherein the piston (2) comprises a channel (3) of constant diameter connecting the two end faces (4; 5) and comprises a piston ring (9) arranged between the two end faces (4; 5) of the piston (2) on the outside of the piston (2) radially projecting to the outside, which in turn terminates in a chamber (10) of the housing (1) and divides this chamber (10) into a first control chamber (11) and a second control chamber (12), **characterized in that** on one of the two end faces (5) a ring-shaped axially aligned valve seal (13) is arranged whose end face (14) forms the closing surface of the piston (2) and in the closed state of the piston (2) bears against a seat surface (15) of the respective valve chamber (7), and that the channel (3) in the interior of the piston (2) with respect to the valve seal (13) is dimensioned and arranged in such a manner that in the closed state of the piston (2) in the region of the valve seal (13) an active area (16) acting against the closing direction is formed which is smaller than the active area (17) of the opposite face end (4) of the piston (2) and that in the opened state of the piston (2) two active areas of the piston (2) on the face end are identical, and that a first active area (23) of the piston ring (9) in the first control chamber (11) is smaller than a second active area (24) of the piston ring (9) in the second control chamber (12), wherein the first control chamber (11) is in connection with a control pressure reservoir (21) of constant pressure via a first control pressure line and the second control chamber (12) via a control valve (22) can be switched to be in connection either with the surroundings or with the control pressure reservoir (21).

2. The valve according to Claim 1, **characterized in that** the valve seal (13) as closing edge comprises a round flange (13') with substantially straight closing surface (14), wherein the closing surface (14) is preferentially aligned perpendicularly to the closing direction of the piston (2).

3. The valve according to Claim 2, **characterized in that** the outer surface of the flange (13') is embodied radially bevelled to the inside towards the closing surface (14).

4. The valve according to any one of the Claims 1 to 3, **characterized in that** the piston (2) and the valve seal (13) are designed in one part of a material, preferentially of plastic or that the piston (2) and the valve seal (13) are designed in two parts of different materials, wherein the valve seal (13) preferentially consists of plastic.

5. The valve according to any one of the Claims 1 to 4, **characterized in that** the channel (3) between the two end faces (4; 5) of the piston (2) is straight and designed with a cross section that remains constant.

6. The valve according to Claim 5, **characterized in that** the cross section of the channel (3) corresponds to the cross section of the inlet channel in the first valve chamber (6).

7. The valve according to any one of the Claims 1 to 6, **characterized in that** the outer diameter of the piston (2) in the region of its end faces (4; 5) is identical in size.

8. The valve according to any one of the Claims 1 to 7, **characterized in that** the valve seat (15) is arranged on the upper face end (31) of an auxiliary piston (30), which is preferentially arranged coaxially to the piston (2) in the housing (1) moveable into the second valve chamber (7) and in the upper end position of the piston (2) can be displaced to fully bear against the valve seal (13).

9. The valve according to Claim 8, **characterized in that** the lower face end (32) of the auxiliary piston (30) terminates in a valve chamber (33) which is in connection with the connecting channel (33') of the second valve chamber (7).

10. The valve according to Claim 9, **characterized in that** the active area on the lower face end (32) of the auxiliary piston (30) in its lower end position is identical in size to or smaller than the active area of the upper face end (31).

11. The valve according to Claim 9 or 10, **characterized in that** in the valve chamber (33) of the lower face end (32) of the auxiliary piston (30) a spring means (34) is arranged, which bears against the lower face end (32) of the auxiliary piston (30) in a resilient manner.

12. The valve according to any one of the Claims 1 to 11, **characterized in that** in the feed line to the first valve chamber (6) a non-return valve (40) is arranged, preferentially a purely pressure-controlled non-return valve (40).

13. Use of a valve according to any one of the Claims 1 to 12 as pre-blowing valve, main blowing valve, economy valve or vent valve of blowing cylinders of hollow body blow moulding machines.

## Revendications

1. Soupape comprenant un boîtier (1), un piston (2), qui est disposé dans le boîtier (1) de façon à pouvoir coulisser dans la longueur entre deux positions extrêmes, la première face frontale (4) du piston (2) débouchant dans un premier espace de soupape (6) et la seconde face frontale (5) du piston (2) dans un second espace de soupape (7), le premier et le second espaces de soupape (6 ; 7) pouvant être reliés par des canaux de liaison disposés dans le boîtier (1) à des conduites de pression respectivement sources de pression (8) externes, le piston (2) présentant un canal (3) reliant les deux faces frontales (4 ; 5) de diamètre constant et présentant un segment de piston (9), dépassant à l'extérieur sur le piston (2) radialement vers l'extérieur et disposé entre les deux faces frontales (4 ; 5), du piston (2), lequel segment débouche pour sa part dans une chambre (10) du boîtier (1) et divise cette chambre (10) en une première chambre de commande (11) et une seconde chambre de commande (12), **caractérisée en ce qu'**un joint de soupape (13) en forme de bague et orienté axialement est disposé sur l'une des deux faces frontales (5), joint dont la face frontale (14) forme la surface de fermeture du piston (2) et est en butée, lorsque le piston (2) est fermé, contre une surface de siège (15) de l'espace de soupape (7) correspondant, et **en ce que** le canal (3) est dimensionné et disposé à l'intérieur du piston (2) par rapport au joint de soupape (13) de telle sorte que, lorsque le piston (2) est fermé, une surface active (16) agissant contre le sens de fermeture est formée dans la zone du joint de soupape (13), laquelle surface est inférieure à la surface active (17) de la face frontale (4) opposée du piston (2), et **en ce que**, lorsque le piston (2) est couvert, à chaque fois des surfaces actives côté avant du piston (2) sont identiques, et **en ce qu'**une première surface active (23) du segment de piston (9) dans la première chambre de commande (11) est inférieure à une seconde surface active (24) du segment de piston (9) dans la seconde chambre de commande (12), la première chambre de commande (11) étant en liaison au moyen d'une première conduite de pression de commande avec un réservoir de pression de commande (21) de pression constante et la seconde chambre de commande (12) étant en liaison de façon commutable au moyen d'une soupape de commande (22) soit avec l'environnement soit avec le réservoir de pression de commande (21).

2. Soupape selon la revendication 1, **caractérisée en ce que** le joint de soupape (13) présente en tant qu'arête de fermeture une bride (13') ronde avec une surface de fermeture (14) sensiblement droite, la surface de fermeture (14) étant orientée de préférence perpendiculairement à la direction de fermeture du piston (2).

3. Soupape selon la revendication 2, **caractérisée en ce que** la surface extérieure de la bride (13') est conçue chanfreinée radialement vers l'intérieur en direction de la surface de fermeture (14).

4. Soupape selon l'une quelconque des revendications 1 à 3, **caractérisée en ce que** le piston (2) et le joint de soupape (13) sont conçus d'un seul tenant à base d'un matériau, de préférence de la matière plastique, ou **en ce que** le piston (2) et le joint de soupape (13) sont conçus en deux parties à base de différents matériaux, le joint de soupape (13) étant de préférence en matière synthétique.

5. Soupape selon l'une quelconque des revendications 1 à 4, **caractérisée en ce que** le canal (3) est conçu droite et avec une section uniforme entre les deux faces frontales (4 ; 5) du piston (2).

6. Soupape selon la revendication 5, **caractérisée en ce que** la section du canal (3) correspond à la section du canal d'entrée dans le première espace de soupape (6).

7. Soupape selon l'une quelconque des revendications 1 à 6, **caractérisée en ce que** le diamètre extérieur du piston (2) est identique dans la zone de ses faces frontales (4 ; 5).

8. Soupape selon l'une quelconque des revendications 1 à 7, **caractérisée en ce que** le siège de soupape (15) est disposé sur la face frontale (31) supérieure d'un piston auxiliaire (30), lequel est disposé dans le boîtier (1) de façon à pouvoir se déplacer de préférence sur le même axe que le piston (2) dans le second espace de soupape (7) et peut coulisser en butée contre le joint de soupape (13) lorsque le piston (2) est dans la position extrême supérieure.

9. Soupape selon la revendication 8, **caractérisée en ce que** la face frontale (32) du piston auxiliaire (30) débouche dans un espace de soupape (33) qui est en liaison avec le canal de liaison (33') du second espace de soupape (7).

10. Soupape selon la revendication 9, **caractérisé en ce que** la surface active sur la face frontale (32) inférieure du piston auxiliaire (30) dans sa position finale inférieure est de grandeur identique ou inférieure à la surface active de la face frontale (31) supérieure.

11. Soupape selon la revendication 9 ou 10, **caractérisé en ce qu'**un moyen à ressort (34), qui est en butée de façon élastique contre la face frontale (32) inférieure du piston auxiliaire (30), est disposé dans l'espace de soupape (33) de la face frontale (32) inférieure du piston auxiliaire (30).

12. Soupape selon l'une quelconque des revendications 1 à 11, **caractérisé en ce qu'**une soupape antiretour (40), de préférence une soupape antiretour (40) commandée uniquement par pression, est disposée dans l'arrivée du premier espace de soupape (6).

13. Utilisation d'une soupape selon l'une quelconque des revendications 1 à 12 comme soupape de pré-soufflage, soupape de soufflage principale, soupape d'économie ou soupape de purge de cylindres de soufflage de machines pour l'extrusion-soufflage.
